# EUROPEAN PATENT APPLICATION

(11) **EP 3 441 629 A1**
(43) Date of publication of application: **13.02.2019**
(21) Application number: 17185824.4
(22) Date of filing: 10.08.2017
(51) Int. Cl.: F16B 23/00, B21K 1/46

(54) **SCREW AND CORRESPONDING PUNCH**

(71) Applicant: Superior Tool Co., Ltd., Kaohsiung City 827 (TW)
(72) Inventor: TSAI, CHIA-HAO, 827 Kaohsiung City (TW)
(74) Representative: Jannig & Repkow Patentanwälte PartG mbB

(57) **Abstract**

A screw (20) includes a shank (22) and a head (24) defining a recess (28). The recess (28) includes a central space zone, a plurality of outer space zones (32), and a plurality of intermediate space zones (34). The central space zone extends downwardly from a top face (26) to an inner bottom of the head (24). The outer space zones (32) extend radially from the central space zone to be arranged around the central space zone (30). Each of the outer space zones (32) is defined by two side surfaces (38) and a first arc-shaped surface (40) therebetween. The intermediate space zones (34) are arranged around the central space zone, between the outer space zones (32). Each of the intermediate space zones (34) is defined by a second arc-shaped surface, which is joined to two adjacent side surfaces (38) of two adjacent outer space zones (32) respectively by two third arc-shaped surfaces (44). Furthermore, a punch is provided to make recesses (28) for screws (20) according to the present invention.

## Description

### BACKGROUND OF THE INVENTION

### 1. Field of the Invention

The present invention relates to a screw and a punch corresponding to the screw and, more particularly, to a screw which defines at its head a recess, which is approximately in the shape of a cross or a plum flower.

### 2. Description of the Related Art

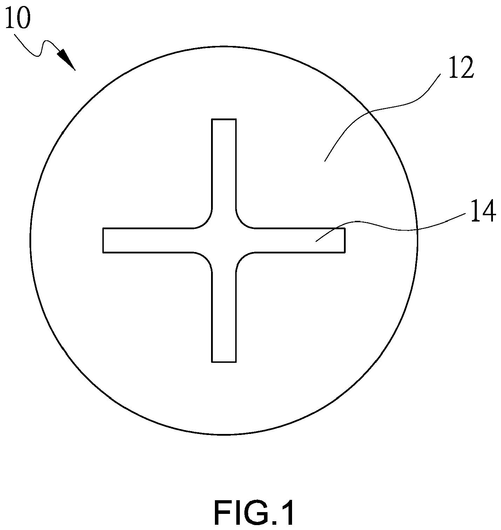

FIG. 1 shows a head 10 of a conventional screw. The head 10 defines at its top face 12 a cross-shaped recess 14 to be inserted with an engagement tip of a screwdriver (not shown) so that the screw can be turned by the screwdriver. For turning the conventional screw, a Philips screwdriver (i.e., a screw tool with a cross-shaped tip) is required. However, the conventional screw has some drawbacks. Firstly, there is inconvenience in aiming a Phillips screwdriver at the screw. Secondly, the cross-shaped recess of the screw does not allow the screwdriver to supply adequate torque. Since the engagement area between the screw and screwdriver is narrow, a high stress may exist therebetween, and thus the recess and/or the engagement tip of the screwdriver can be easily damaged, thus reducing their life spans. Thirdly, a Philips screwdriver is unable to have an interference fit with a Philips screw (such as the conventional screw), magnetic force is usually employed to increase the engagement strength between the screwdriver and the screw to prevent the screwdriver from being easily disengaged from the screw, and this leads to an increased cost of the screw.

### BRIEF SUMMARY OF THE INVENTION

Thus, an objective of the present invention is to provide a screw and a punch corresponding to the screw. The screw defines a recess at its head to be easily inserted with the engagement bit of a tool (such as a screwdriver), so that the screw can receive a maximum torque from the tool. The punch can be used to make recesses in screws with any shapes of heads.

The screw of the present invention includes a shank and a head formed on top of the shank. The head has a top face that defines a recess to be inserted with an engagement tip of a tool. The recess is configured to include a central space zone, a plurality of outer space zones, and a plurality of intermediate space zones. The central space zone extends downwardly from the top face to an inner bottom of the head. The outer space zones extend radially from the central space zone such that the outer space zones are arranged around the central space zone and spaced from each other. Each of the outer space zones is defined by two side surfaces and a first arc-shaped surface joined between two outer borders of the two side surfaces. The side surfaces and the first arc-shaped surface extend downwardly from the top face to the inner bottom of the head. The intermediate space zones are arranged around the central space zone, between the outer space zones. Each of the intermediate space zones is defined by a second arc-shaped surface, which is curved outwardly of the central space zone and arranged between two adjacent side surfaces of two adjacent outer space zones, wherein the second arc-shaped surfaces of the intermediate space zones extend downwardly from the top face to the inner bottom of the head, and each of the second arc-shaped surfaces is joined to two inner borders of two adjacent side surfaces of two adjacent outer space zones respectively by two third arc-shaped surfaces, which are curved inwardly of the central space zone.

The punch of the present invention includes a main body and a punch head protruding from a front face of the main body for making a recess at a head of a screw. The punch head includes a central portion, a plurality of outer portions, and a plurality of intermediate portions. The central portion protrudes from the front face of the main body at a predetermined length. The outer portions extend radially from the central portion such that the outer portions are formed around the central portion and spaced from each other. Each of the outer portions has two side cutting surfaces and a first arc-shaped cutting surface joined between two outer borders of the side cutting surfaces. The two side cutting surfaces and the first arc-shaped cutting surface extend forwardly from the front face of the main body in oblique directions such that the side cutting surfaces and the first arc-shaped cutting surface come closer to each other. The intermediate portions are formed around the central portion, between the outer portions. Each of the intermediate portions has a second arc-shaped cutting surface arranged between two adjacent side cutting surfaces of two adjacent outer portions and curved outwardly of the central portion. The second arc-shaped surfaces of the intermediate portions extend forwardly from the front face of the main body in oblique directions such that the second arc-shaped surfaces come closer to each other. Each of the second arc-shaped cutting surfaces is joined to two inner borders of two adjacent side cutting surfaces of two adjacent outer portions respectively by two third arc-shaped cutting surfaces, which are curved inwardly of the central portion.

The present invention will become clearer in light of the following detailed description of illustrative embodiments of this invention described in connection with the drawings.

### DESCRIPTION OF THE DRAWINGS

The illustrative embodiments may best be described by reference to the accompanying drawings where:
FIG. 1 shows a schematic view of a conventional screw.
FIG. 2 shows a 3-dimensional view of a screw according to one embodiment of the present invention.
FIG. 3 shows a top view of the screw of FIG. 2.
FIG. 4 shows a sectional view of the screw of FIG. 2.
FIG. 5 shows a top view of a screw according to another embodiment of the present invention, wherein the screw defines a recess in the shape of a plum flower.
FIG. 6 shows a 3-dimensional view of a punch according to one embodiment of the present invention.
FIG. 7 shows a side view of the punch of FIG. 6.
FIG. 8 shows a top view of the punch of FIG. 6.
FIG. 9 shows a schematic view of the punch of FIG. 6, wherein the punch is used to make a recess at a screw's head.

### DETAILED DESCRIPTION OF THE INVENTION

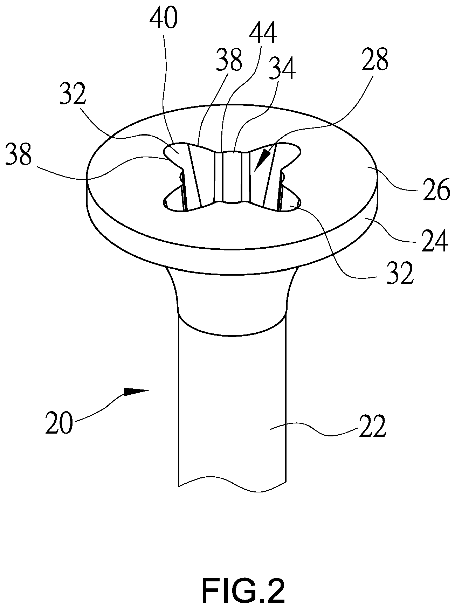

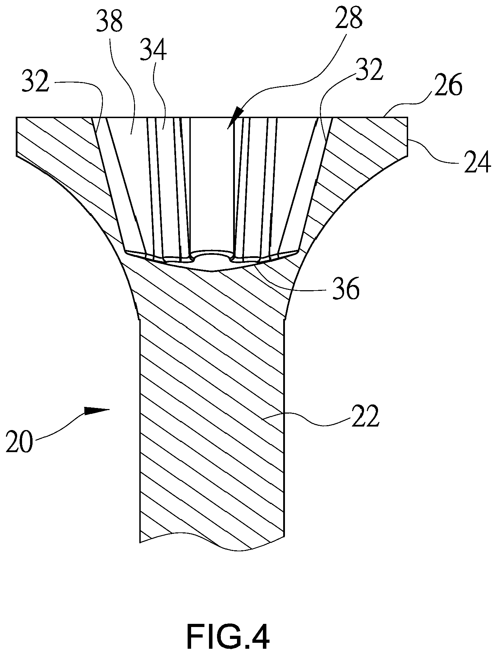

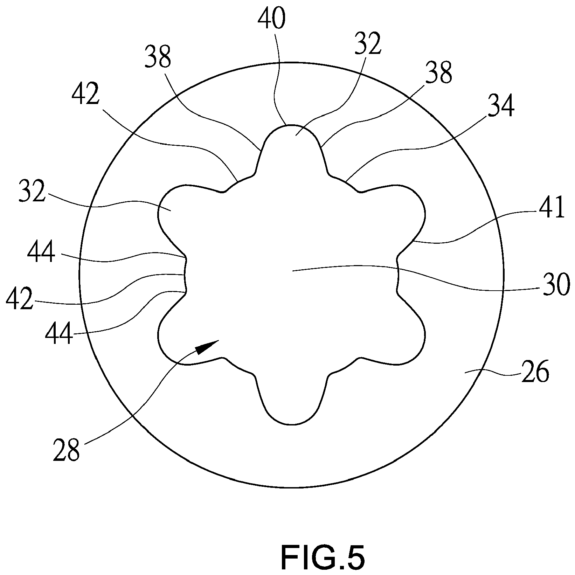

A screw according to the present invention is shown in FIGS. 2 through 4 of the drawings and generally designated 20. The screw 20 generally includes a shank 22 and a head 24 formed on top of the shank 22. The shank 22 is provided with threads (not shown). The head 24 defines a recess 28 at a top face 26 thereof to be inserted with an engagement or drive tip of a tool (such as a screwdriver), so that the screw 20 can be turned by the tool. In this embodiment, the recess 28 includes a central space zone 30, four outer space zones 32 radially extending from the central space zone 30, and four intermediate space zones 34 evenly arranged around the central space zone 30, between the outer space zones 32. The central space zone 30 extends into the head 24 at a predetermined distance or depth sufficient for allowing the engagement tip of a screwdriver to be inserted into the recess 28 properly, so that the screwdriver can be firmly engaged with the screw 20. The recess 28 is bounded by an inner bottom 36 (see FIG. 4). In this embodiment, the number of the outer space zones 32 is four, and thus the outer space zones 32 are arranged around the central space zone 30 at intervals of 90 degrees and spaced from each other. The four outer space zones 32 are spaced apart equally about the central space zone 30. The recess 28 is approximately in the shape of a cross. FIG 5 shows another embodiment of the present invention, wherein the recess 28 includes six outer space zones 32 being arranged at intervals of 60 degrees, and thus the recess 28 has the appearance of a plum flower. In other embodiments, the number of outer space zones 32 included in the recess 28 can be more than six. Fore example, the recess 28 may include eight or twelve outer space zones 32.

Each of the outer space zones 32 is defined by two spaced-apart side surfaces 38 and a first arc-shaped surface 40 joined between two outer borders of the side surfaces 38. The two side surfaces 38 and the first arc-shaped surface 40 extend from the top face 26 of the head 24 to the inner bottom 36 of the head 24 in oblique directions such that the surfaces 38, 40 come closer to each other. The first arc-shaped surface 40 is curved outwardly of the central space zone 30 (i.e., the curvature center of the surface 40 and the central space zone 30 being located at the same side of the surface 40). When the engagement tip of a screwdriver is inserted into the recess 28 for turning the screw 20 (not shown), the two borders 41 of the first arc-shaped surface 40 joined with the outer borders of the side surfaces 38 can serve as a drive location through which a torque can be transferred from the screwdriver to the screw 20. Each of the intermediate space zones 34 are arranged around the central space zone 30, between the outer space zones 32. As such, the outer space zones 32 are separated from each other by the intermediate space zones 34. Each of the intermediate space zones 34 is defined by a second arc-shaped surface 42, which is arranged between two adjacent side surfaces 38 of two adjacent outer space zones 32, and curved outwardly of the central space zone 30 (i.e., the curvature center of the surface 42 and the central space zone 30 being located at the same side of the surface 42). The second arc-shaped surfaces 42 of the intermediate space zones 34 extend from the top face 26 of the head 24 to the inner bottom 36 in oblique directions such that the surfaces 42 come closer to each other. Furthermore, each of the second arc-shaped surfaces 42 is joined to two inner borders of two adjacent side surfaces 38 of two adjacent outer space zones 32 respectively by two third arc-shaped surfaces 44, which are curved inwardly of the central space zone 30 (i.e., the curvature center of the surface 44 and the central space zone 30 being located at opposite sides of surface 44). As such, the second and third arc-shaped surfaces 42, 44 can provide additional engagement surfaces to allow the engagement tip of a screwdriver to be in tight engagement with the recess 28 of the screw 20.

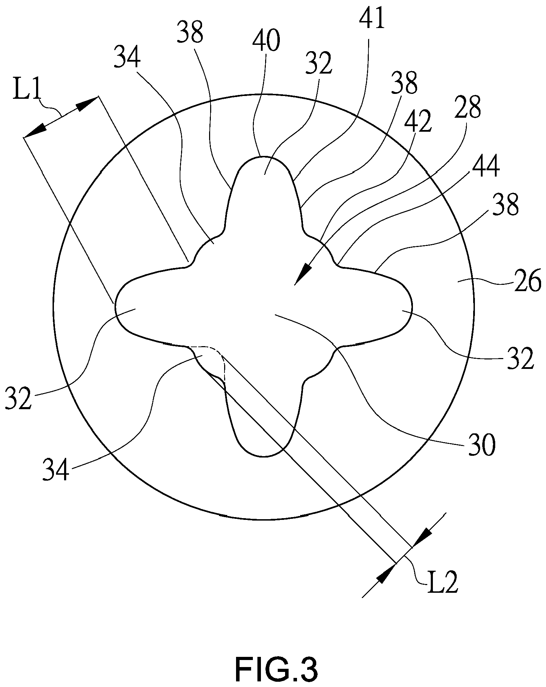

The recess 28 can be formed at screws with any shapes of heads. Thus, screws according to the present invention can be manufactured easily. As shown in FIG. 3, since the central space zone 30 of the recess 28 of the screw 20 is larger than the central portion of the cross-shaped recess 14 of the conventional screw shown in FIG. 1, the engagement tip of a screwdriver corresponding to the screw 20 can be inserted into the recess 28 of the screw 20 of the present invention easily. Each of the outer space zones 32 extends from the central space zone 30 by a length of L1. The locations 41 between the first arc-shaped surface 40 and the side surfaces 38 of the outer space zones 32 can receive a large torque. The third arc-shaped surfaces 44 between the side surfaces 38 and the second arc-shaped surfaces 42 can receive additional torque. As a result, the recess 28 of the screw 20 can receive a significantly large torque supplied from the screwdriver. Furthermore, each of the second arc-shaped surfaces 42 extends from the central space zone 30 by a length of L2, which is about 1-3 mm. Since the second and third arc-shaped surfaces 42, 44 can provide additional engagement surfaces between the screw 20 and a screwdriver, the engagement tip of the screwdriver can be in tight engagement with the recess 28 of the screw 20, without employing magnetic force. Thus, the stability of operating the screw can be increased without increasing the manufacturing cost.

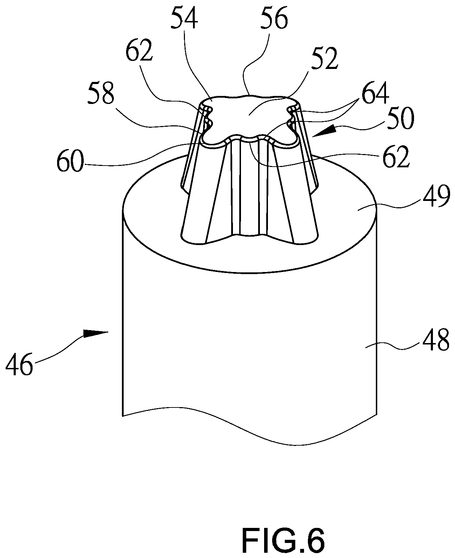

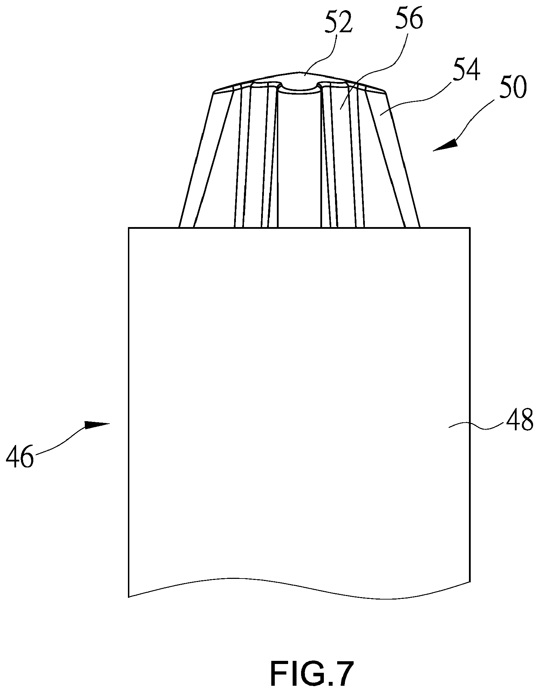

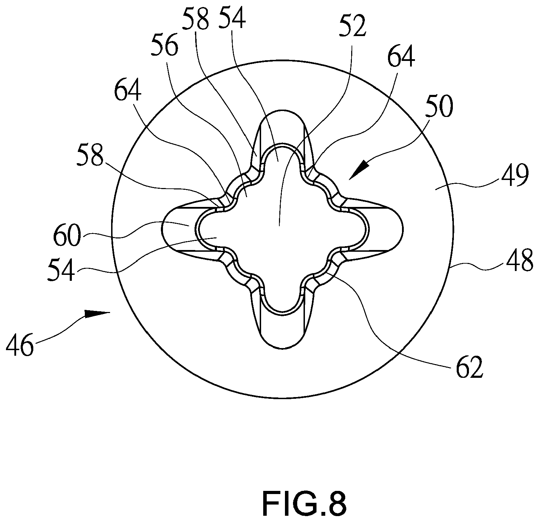

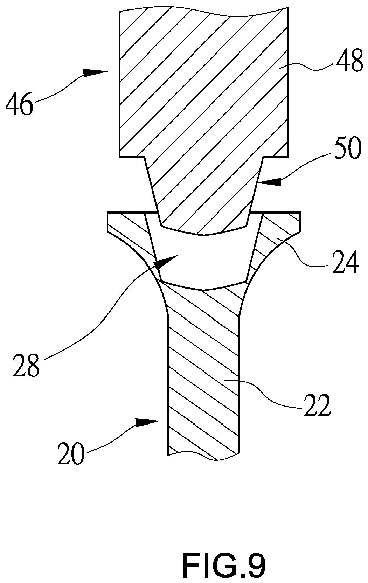

FIGS.6 through 8 show a punch 46 according to one embodiment of the present invention, which can be used to make a recess 28 at the head 24 of the screw 20 according to the present invention. The punch 46 generally includes a main body 48 and a punch head 50 protruding from the front face 49 of the main body 48. The punch head 50, which can be used to hit on the head of a screw to form the recess 28 according to the present invention (see FIG. 9), includes a central portion 52, four outer portions 54 extending radially from the central portion 52, and four intermediate portions 56 formed around the central portion 52, between the outer portions 54. The central portion 52, which has a predetermined length, corresponds to the central space zone 30 of the recess 28 defined at the head 24 of the screw 20. The outer portions 54 are separated from each other and evenly formed around the central portion 52 at intervals of 90 degrees, namely, the angle between any two adjacent outer portions 54 is about 90 degrees, so that the punch head 50 is approximately in the shape of a cross in cross section. In another embodiment, the punch head 50 may include six outer portions 54 evenly formed around the central portion 52, and thus the angle between two any adjacent outer portions 54 is about 60 degrees, so hat the punch head 50 is approximately in the shape of a plum flower in cross section. In other embodiments, the number of the outer portions 54 formed in the punch head 50 can be more than six, such as eight or twelve.

Each of the outer portions 54 has two side cutting surfaces 58 and a first arc-shaped cutting surface 60 joined between two outer borders of the two side cutting surfaces 58. The two side cutting surfaces 58 and the first arc-shaped cutting surface 60 extend forwardly from the front face 49 of the main body 48 in oblique directions such that the cutting surfaces 58, 60 come closer to each other. The first arc-shaped cutting surface 60 is curved outwardly of the central portion 52 (i.e., the curvature center of the cutting surface 60 and the central portion 52 being located at the same side of the cutting surface 60). The intermediate portions 56 are formed around the central portion 52, between the outer portions 54. As such, the outer portions 54 are separated from each other by the intermediate portions 56. Each of the intermediate portions 56 has a second arc-shaped cutting surface 62, which is located between two adjacent side cutting surfaces 58 of two adjacent outer portions 54, and curved outwardly of the central portion 52 (i.e., the curvature center of the cutting surface 62 and the central portion 52 being located at the same side of the cutting surface 62). The second arc-shaped cutting surfaces 62 of the intermediate portions 56 extend forwardly from the front face 49 of the main body 48 in oblique directions such that the cutting surfaces 62 come closer to each other. Furthermore, each of the second arc-shaped cutting surfaces 62 is joined to two inner borders of two adjacent side cutting surfaces 58 of two adjacent outer portions 54 respectively by two third arc-shaped cutting surfaces 64, which are curved inwardly of the central portion 52 (i.e., the curvature center of the cutting surfaces 64 and the central portion 52 being located at opposite sides of the cutting surfaces 64). The recess 28 of the head 24 of the screw 20 can be formed by the punch head 50 hitting on the head 24 of the screw 20, wherein the central portion 52 and the outer portions 54 correspond to the central space zone 28 and the outer space zones 32, and the intermediate portions 56 and the third arc-shaped cutting surfaces 64 correspond to the intermediate space zones 34 and the third arc-shaped surfaces 44.

Although the present invention has been described with a certain degree of particularity, it is understood that the present disclosure is made by way of example only and the combination and arrangement of parts may be resorted to without departing from the spirit and scope of the invention hereinafter claimed.

## Claims

1. A screw (20) comprising a shank (22) and a head (24) formed on top of the shank (22), the head (24) having a top face (26) that defines a recess (28) to be inserted with an engagement tip of a tool, wherein the recess (28) is configured to include:
a central space zone (30) extending downwardly from the top face (26) to an inner bottom (36) of the head (24);
a plurality of outer space zones (32) extending radially from the central space zone (30) such that the outer space zones (32) are arranged around the central space zone (30) and spaced from each other, with each of the plurality of outer space zones (32) defined by two side surfaces (38) and a first arc-shaped surface (40) joined between two outer borders of the two side surfaces (38), with the two side surfaces (38) and the first arc-shaped surface (40) extending downwardly from the top face (26) to the inner bottom (36) of the head (24); and
a plurality of intermediate space zones (34) arranged around the central space zone (30), between the plurality of outer space zones (32), with each of the plurality of intermediate space zones (34) defined by a second arc-shaped surface (42), which is curved outwardly of the central space zone (30) and arranged between two adjacent side surfaces (38) of two adjacent outer space zones (32), with the second arc-shaped surfaces (42) of the plurality of intermediate space zones (34) extending downwardly from the top face (26) to the inner bottom (36) of the head (24), with each of the second arc-shaped surfaces (42) joined to two inner borders of two adjacent side surfaces (38) of two adjacent outer space zones (32) respectively by two third arc-shaped surfaces (44), which are curved inwardly of the central space zone (30).

2. The screw of claim 1, wherein the first arc-shaped surface (40), which defines one of the plurality of outer space zones (32), is curved outwardly of the central space zone (30).

3. The screw of claim 2, wherein the number of the plurality of outer space zones (32) is four, and the plurality of outer space zones (32) are arranged around the central space zone (30) at intervals of 90 degrees.

4. The screw of claim 2, wherein the number of the plurality of outer space zones (32) is six, and the plurality of outer space zones (32) are arranged around the central space zone (30) at intervals of 60 degrees.

5. A punch (46) comprising a main body (48) and a punch head (50) protruding from a front face (49) of the main body (48) for making a recess (28) at a head (24) of a screw (20), wherein the punch head (50) includes:
a central portion (52) protruding from the front face (49) of the main body (48) at a predetermined length;
a plurality of outer portions (54) extending radially from the central portion (52) such that the plurality of outer portions (54) are formed around the central portion (52) and separated from each other, with each of the plurality of outer portions (54) having two side cutting surfaces (58) and a first arc-shaped cutting surface (60) joined between two outer borders of the two side cutting surfaces (58), with the two side cutting surfaces (58) and the first arc-shaped cutting surface (60) extending forwardly from the front face (49) of the main body (48) in oblique directions such that the two side cutting surfaces (58) and the first arc-shaped cutting surface (60) come closer to each other; and
a plurality of intermediate portions (56) formed around the central portion (52), between the plurality of outer portions (54), with each of the plurality of intermediate portions (56) having a second arc-shaped cutting surface (62) arranged between two adjacent side cutting surfaces (58) of two adjacent outer portions (54) and curved outwardly of the central portion (52), with the second arc-shaped surfaces (62) of the intermediate portions (56) extending forwardly from the front face (49) of the main body (48) in oblique directions such that the second arc-shaped surfaces (62) come closer to each other, with each of the second arc-shaped cutting surfaces (62) joined to two inner borders of two adjacent side cutting surfaces (58) of two adjacent outer portions (54) respectively by two third arc-shaped cutting surfaces (64), which are curved inwardly of the central portion (52).

6. The punch of claim 5, wherein the first arc-shaped cutting surface (60) formed at each of the plurality of outer portions (54) is curved outwardly of the central portion (52).

7. The punch of claim 5, wherein the number of the plurality of outer portions (54) is four, and the plurality of outer portions (54) are formed around the central portion (52) at intervals of 90 degrees.

8. The punch of claim 5, wherein the number of the plurality of outer portions (54) is six, and the plurality of outer portions (54) are formed around the central portion (52) at intervals of 60 degrees.
